# EUROPEAN PATENT APPLICATION

(11) **EP 4 672 148 A1**
(43) Date of publication of application: **31.12.2025**
(21) Application number: 25212942.4
(22) Date of filing: 03.11.2025
(51) Int. Cl.: G06T 7/55

(54) **THREE-DIMENSIONAL RECONSTRUCTION METHOD, ELECTRONIC DEVICE AND STORAGE MEDIUM**

(30) Priority: 21.03.2025 CN 202510338798
(71) Applicant: Shining 3D Tech Co., Ltd., Hangzhou, Zhejiang 311258 (CN)
(72) Inventor: FU, Xiaopeng, 311258 Hangzhou (CN); ZHAO, Xiaobo, 311258 Hangzhou (CN); CHEN, Xiaojun, 311258 Hangzhou (CN); MA, Chao, 311258 Hangzhou (CN)
(74) Representative: Metida

(57) **Abstract**

The present application provides a three-dimensional reconstruction method, an electronic device (100) and a storage medium, the method includes obtaining a first image frame set of an oral cavity in a first state, where the oral cavity in the first state indicates that at least one actual scan body is installed in the oral cavity. A scan body area of each image frame in the first image frame set is identified. Once multiple image frames in the first image frame set are spliced and constructed based on feature information of the scan body area, the target three-dimensional data corresponding to the actual scan body in the oral cavity is obtained.

## Description

### TECHNICAL FIELD

The present application relates to a field of three-dimensional reconstruction technology, and in particular to a three-dimensional reconstruction method, an electronic device and a storage medium.

### BACKGROUND

During an oral scanning process, multiple image frames need to be spliced and aligned through common areas (or transition areas) to reconstruct a complete three-dimensional model. In related technologies, in scenarios such as edentulous jaw implants or large-span implants, soft tissue areas such as gums are usually selected as transition areas, and data from different areas or different image frames are spliced. However, due to a lack of rigid support of soft tissues such as gums, they are easily deformed by external forces (such as opening movements, instrument contact) or muscle traction (such as grinning), and a patient's physiological activities (such as breathing, saliva secretion, etc.) are also prone to cause slight displacement of soft tissues, resulting in changes in a morphology of the soft tissue area. In this case, if the soft tissue area is selected as the transition area, coordinates of the transition area in scanning data may be offset, affecting a splicing accuracy of adjacent areas or adjacent frame data, thereby reducing an accuracy of three-dimensional reconstruction. A final restoration denture is based on deformed gum data for computer-aided design (CAD), which may cause a restoration to compress the gums or create gaps when it is in place in the oral cavity. If the deformation exceeds a certain limit, the patient may feel uncomfortable in mild cases, and the implant may fail in severe cases.

### SUMMARY

In view of this, the present application provides a three-dimensional reconstruction method, an electronic device and a storage medium.

A first aspect of an embodiment of the present application provides a three-dimensional reconstruction method applied to an electronic device, comprising: obtaining a first image frame set of an oral cavity in a first state, the oral cavity in the first state indicating that at least one actual scan body is installed in the oral cavity; identifying a scan body area of each image frame in the first image frame set; and splicing and reconstructing a plurality of image frames in the first image frame set based on feature information of the scan body area, and obtaining target three-dimensional data corresponding to the at least one actual scan body in the oral cavity.

In some embodiments, before obtaining the target three-dimensional data corresponding to the actual scan body in the oral cavity, the method further comprises: identifying a soft tissue area in each image frame in the first image frame set, wherein the soft tissue area is not used in a three-dimensional reconstruction of the target three-dimensional data or the soft tissue area is used in the three-dimensional reconstruction of the target three-dimensional data according to a preset weight.

In some embodiments, the method further comprises: performing one or more operations, which comprise a removal operation, a marking operation, a hiding operation, and a segmentation operation on the soft tissue area in each image frame, based on feature information of the soft tissue area in each image frame in the first image frame set; and/or performing one or more operations, which comprise a removal operation, a marking operation, a hiding operation and a segmentation operation on the scan body area based on the feature information of the scan body area.

In some embodiments, the first image frame set comprises a texture image frame and a depth image frame, and identifying the scan body area of each image frame in the first image frame set comprises: performing a feature extraction and a feature fusion on the texture image frame and the depth image frame by using a preset recognition model, and obtaining a mask image, wherein the mask image comprises the scan body area.

In some embodiments, splicing and reconstructing the plurality of image frames in the first image frame set based on the feature information of the scan body area, and obtaining the target three-dimensional data corresponding to the at least one actual scan body in the oral cavity, comprises: splicing the plurality of image frames in the first image frame set in real time based on the feature information of the scan body area, and obtaining real-time spliced image frames; and obtaining the target three-dimensional data corresponding to the at least one actual scan body based on the real-time spliced image frames.

In some embodiments, splicing and reconstructing the plurality of image frames in the first image frame set based on feature information of the scan body area, and obtaining target three-dimensional data corresponding to the at least one actual scan body in the oral cavity, comprises: splicing the plurality of image frames in the first image frame set in real time based on the feature information of the scan body area; obtaining actual scanning data corresponding to the at least one actual scan body in real time based on the spliced image frames; matching standard data of the at least one actual scan body from the standard scan body database based on the feature information of the scan body area, wherein the matching is a regular matching in a real-time scanning process, features of current actual scanning data are spliced with features of the standard data each time a specified amount of actual scanning data is obtained or each time interval during the real-time scanning process, and a position and a posture of the standard data are updated as the scanning data is increased; and replacing the scanning data of the at least one actual scan body by using the standard data of the at least one actual scanning rod, and obtaining the target three-dimensional data.

In some embodiments, the method further comprises: acquiring a second image frame set of the oral cavity in a second state, wherein the oral cavity in the second state indicates that no actual scan body is installed in the oral cavity; acquiring regional three-dimensional data of a soft tissue area in each image frame in the second image frame set based on the second image frame set; acquiring a third image frame set, wherein the third image frame set comprises some image frames of the first image frame set or updated image frames acquired when the oral cavity is in the first state; based on feature information of each image frame in the third image frame set and the feature information of the scan body area, merging the regional three-dimensional data corresponding to the soft tissue area with the target three-dimensional data, and obtaining an oral cavity model.

In some embodiments, the method further comprises: displaying the target three-dimensional data in real time on an interactive interface of the electronic device, based on the feature information of the scan body area, when acquiring the first image frame set of the oral cavity in the first state; or displaying the oral cavity model on the interactive interface in response to a switching instruction after the second image frame set has been obtained.

In some embodiments, splicing the plurality of image frames in the first image frame set based on the feature information of the scan body area, comprises: determining whether there is overlapped feature data between adjacent image frames in the plurality of image frames based on the feature information of the scan body area; in response that there is overlapped feature data between adjacent image frames in the plurality of image frames, splicing the adjacent image frames in real time based on the overlapped feature data; in response that there is no overlapped feature data between adjacent image frames in the multiple image frames, prompting a user that the splicing is failed and/or prompting the user to return to an initial position for scanning by issuing a prompt message.

In some embodiments, the method further comprises: generating a design model based on the target three-dimensional data and sending the design model to a three-dimensional printing device; receiving a user request for modifying the design model in real time; outputting a revised 3D design model based on the user request and the target three-dimensional model.

A second aspect of an embodiment of the present application provides an electronic device, comprising: a storage device storing a computer program; and at least one processor, when the computer program is executed by the at least one processor, the at least one processor is caused to: obtain a first image frame set of an oral cavity in a first state, the oral cavity in the first state indicating that at least one actual scan body is installed in the oral cavity; identify a scan body area of each image frame in the first image frame set; and splice and reconstruct a plurality of image frames in the first image frame set based on feature information of the scan body area, and obtain target three-dimensional data corresponding to the at least one actual scan body in the oral cavity.

In some embodiments, before obtaining the target three-dimensional data corresponding to the actual scan body in the oral cavity, the at least one processor is further caused to: identify a soft tissue area in each image frame in the first image frame set, wherein the soft tissue area is not used in a three-dimensional reconstruction of the target three-dimensional data or the soft tissue area is used in the three-dimensional reconstruction of the target three-dimensional data according to a preset weight.

In some embodiments, the at least one processor is further caused to: perform one or more operations, which comprise a removal operation, a marking operation, a hiding operation, and a segmentation operation on the soft tissue area in each image frame, based on feature information of the soft tissue area in each image frame in the first image frame set; and/or perform one or more operations, which comprise a removal operation, a marking operation, a hiding operation and a segmentation operation on the scan body area based on the feature information of the scan body area.

In some embodiments, the first image frame set comprises a texture image frame and a depth image frame, and the at least one processor identifies the scan body area of each image frame in the first image frame set by: performing a feature extraction and a feature fusion on the texture image frame and the depth image frame by using a preset recognition model, and obtaining a mask image, wherein the mask image comprises the scan body area.

In some embodiments, the at least one processor splices and reconstructs the plurality of image frames in the first image frame set based on the feature information of the scan body area, and obtains the target three-dimensional data corresponding to the at least one actual scan body in the oral cavity, by: splicing the plurality of image frames in the first image frame set in real time based on the feature information of the scan body area, and obtaining real-time spliced image frames; and obtaining the target three-dimensional data corresponding to the at least one actual scan body based on the real-time spliced image frames.

In some embodiments, the at least one processor splices and reconstructs the plurality of image frames in the first image frame set based on the feature information of the scan body area, and obtains the target three-dimensional data corresponding to the at least one actual scan body in the oral cavity, by: splicing the plurality of image frames in the first image frame set in real time based on the feature information of the scan body area; obtaining actual scanning data corresponding to the at least one actual scan body in real time based on the spliced image frames; matching standard data of the at least one actual scan body from the standard scan body database based on the feature information of the scan body area, wherein the matching is a regular matching in a real-time scanning process, features of current actual scanning data are spliced with features of the standard data each time a specified amount of actual scanning data is obtained or each time interval during the real-time scanning process, and a position and a posture of the standard data are updated as the scanning data is increased; and replacing the scanning data of the at least one actual scan body by using the standard data of the at least one actual scanning rod, and obtaining the target three-dimensional data.

In some embodiments, the at least one processor is further caused to: acquire a second image frame set of the oral cavity in a second state, wherein the oral cavity in the second state indicates that no actual scan body is installed in the oral cavity; acquire regional three-dimensional data of a soft tissue area in each image frame in the second image frame set based on the second image frame set; acquire a third image frame set, wherein the third image frame set comprises some image frames of the first image frame set or updated image frames acquired when the oral cavity is in the first state; based on feature information of each image frame in the third image frame set and the feature information of the scan body area, merge the regional three-dimensional data corresponding to the soft tissue area with the target three-dimensional data, and obtaining an oral cavity model.

In some embodiments, the at least one processor is further caused to: display the target three-dimensional data in real time on an interactive interface of the electronic device, based on the feature information of the scan body area, when acquiring the first image frame set of the oral cavity in the first state; or display the oral cavity model on the interactive interface in response to a switching instruction after the second image frame set has been obtained.

In some embodiments, the at least one processor splices the plurality of image frames in the first image frame set based on the feature information of the scan body area, by: determining whether there is overlapped feature data between adjacent image frames in the plurality of image frames based on the feature information of the scan body area; in response that there is overlapped feature data between adjacent image frames in the plurality of image frames, splicing the adjacent image frames in real time based on the overlapped feature data; in response that there is no overlapped feature data between adjacent image frames in the multiple image frames, prompting a user that the splicing is failed and/or prompting the user to return to an initial position for scanning by issuing a prompt message.

A third aspect of an embodiment of the present application provides a non-transitory storage medium, being stored with a computer program, which when executed by a processor, causing the processor performs a three-dimensional reconstruction method, wherein the three-dimensional reconstruction method comprises: obtaining a first image frame set of an oral cavity in a first state, the oral cavity in the first state indicating that at least one actual scan body is installed in the oral cavity; identifying a scan body area of each image frame in the first image frame set; and splicing and reconstructing a plurality of image frames in the first image frame set based on feature information of the scan body area, and obtaining target three-dimensional data corresponding to the at least one actual scan body in the oral cavity.

### BRIEF DESCRIPTION OF THE DRAWINGS

In order to more clearly illustrate the technical solutions of the embodiments of the present application, the drawings required for use in the description of the embodiments of the present application may be briefly introduced below. Obviously, the drawings described below are only some embodiments of the present application. For ordinary technicians in this field, other drawings may be obtained based on these drawings without paying any creative labor.
FIG. 1 is an example diagram of an electronic device for implementing a three-dimensional (3D) reconstruction method provided in an embodiment of the present application.
FIG. 2 is a flowchart of a three-dimensional reconstruction method provided in an embodiment of the present application.
FIG. 3 is an example diagram of an interactive interface provided in a first embodiment of the present application.
FIG. 4 is an example diagram of an interactive interface provided in a second embodiment of the present application.
FIG. 5 is an exemplary diagram of an area of a scan body (hereinafter "scan body area") in an image frame provided by a first embodiment of the present application.
FIG. 6 is an exemplary diagram of a scan body area in an image frame provided by a second embodiment of the present application.
FIG. 7 is an exemplary diagram of a scan body area in an image frame provided in a third embodiment of the present application.
FIG. 8 is an example diagram of target three-dimensional data provided by an embodiment of the present application.
FIG. 9 is an example diagram of an oral cavity model provided in an embodiment of the present application.
FIG. 10 is a schematic diagram of a structure of a three-dimensional reconstruction apparatus provided in an embodiment of the present application.

### DETAILED DESCRIPTION

The following may be combined with the drawings in the embodiments of the present application to clearly and completely describe the technical solutions in the embodiments of the present application. Obviously, the described embodiments are part of the embodiments of the present application, not all of the embodiments. Based on the embodiments in the present application, all other embodiments obtained by ordinary technicians in this field without creative work are within the scope of protection of this application.

In the following, the terms "first" and "second" are used for descriptive purposes only and should not be understood as indicating or implying relative importance or implicitly indicating the number of indicated technical features. Thus, the features defined as "first" and "second" may explicitly or implicitly include one or more of the features. In the description of the embodiments of the present application, words such as "exemplary" or "for example" are used to indicate examples, illustrations or explanations. Any embodiment or design described as "exemplary" or "for example" in the embodiments of the present application should not be interpreted as being more preferred or more advantageous than other embodiments or designs. Specifically, the use of words such as "exemplary" or "for example" is intended to present related concepts in a concrete way.

Unless otherwise defined, all technical and scientific terms used herein have the same meaning as those generally understood by technicians in the technical field in this application. The terms used in the specification of this application are only for the purpose of describing specified embodiments and are not intended to limit this application. It should be understood that, unless otherwise specified in this application, "/" means or. For example, A/B may represent A or B. "And/or" in this application is only a description of the association relationship of associated objects, indicating that three relationships may exist. For example, A and/or B may represent: A exists alone, A and B exist at the same time, and B exists alone. "At least one" means one or more. "Multiple" means two or more than two. For example, at least one of "a", "b" or "c" may represent: "a", "b", "c", "a" and "b", "a" and "c", "b" and "c", "a", "b" and "c" seven situations.

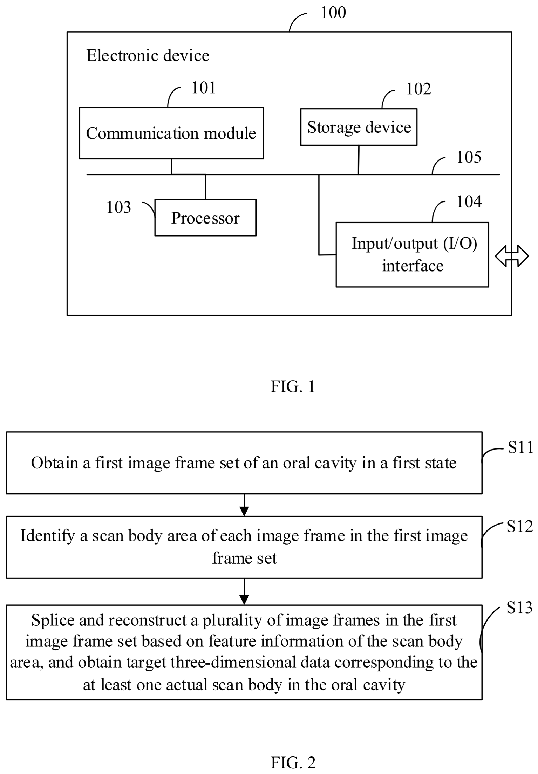

Please refer to FIG. 1, which is a diagram of an electronic device for implementing a three-dimensional reconstruction method provided in an embodiment of the present application. As shown in FIG. 1, the three-dimensional reconstruction method provided in the embodiment of the present application may be applied to an electronic device 100, and the electronic device 100 may include one or more devices such as a mobile phone, a tablet computer, a smart wearable device, a laptop computer, a scanning device (such as a dental digital impression device), etc. The embodiment of the present application does not limit a specified type of the electronic device.

As shown in FIG. 1, the electronic device 100 may include a communication module 101, a storage device 102, a processor 103, an input/output (I/O) interface 104, and a bus 105. The processor 103 is coupled to the communication module 101, the storage device 102, and the I/O interface 104 through the bus 105.

The communication module 101 may include a wired communication module and/or a wireless communication module. The wired communication module may provide one or more solutions for a wired communication such as universal serial bus (USB), controller area network bus (CAN). The wireless communication module may provide one or more solutions for a wireless communication such as wireless fidelity (Wi-Fi), BLUETOOTH (BT), mobile communication network, frequency modulation (FM), near field communication technology (NFC), infrared technology (IR), etc.

The storage device 102 may include one or more random access memories (RAM) and one or more non-volatile memories (NVM). The random access memory may be directly read and written by the processor 103, and may be used to store executable programs (such as machine instructions) of the operating system or other running programs, and may also be used to store user and application data. The random access memory may include static random-access memory (SRAM), dynamic random access memory (DRAM), synchronous dynamic random access memory (SDRAM), double data rate synchronous dynamic random access memory (DDR SDRAM), etc.

The non-volatile memory may also store executable programs, user data, and application data, etc., and may be loaded into the random access memory in advance for direct reading and writing by the processor 103. The non-volatile memory may include a disk storage device and a flash memory.

The storage device 102 is used to store one or more computer programs. The one or more computer programs are configured to be executed by the processor 103. The one or more computer programs include a plurality of instructions. When the plurality of instructions are executed by the processor 103, the three-dimensional reconstruction method executed on the electronic device 100 may be implemented.

In other embodiments, the electronic device 100 further includes an external storage device interface for connecting to an external storage device to expand a storage capacity of the electronic device 100.

The processor 103 may include one or more processing units, for example, the processor 103 may include an application processor (AP), a modem processor, a graphics processor (GPU), an image signal processor (ISP), a controller, a video codec, a digital signal processor (DSP), a baseband processor, and/or a neural-network processing unit (NPU), etc. Different processing units may be independent devices or integrated into one or more processors.

The processor 103 provides computing and control capabilities. For example, the processor 103 is used to execute a computer program stored in the storage device 102 to implement the above-mentioned three-dimensional reconstruction method.

The I/O interface 104 is used to provide a channel for user input or user output. For example, the I/O interface 104 may be used to connect various input and output devices, such as a mouse, a keyboard, a touch device, a display screen, etc., so that the user may enter information or visualize information. In addition, the I/O interface 104 may also be used to connect various sensor devices, such as radar sensors, image sensors, etc., so as to obtain the required radar point cloud data, image data and other data.

The bus 105 is at least used to provide a channel for mutual communication among the communication module 101, the storage device 102, the processor 103, and the I/O interface 104 in the electronic device 100.

It is to be understood that the structure illustrated in the embodiment of the present application does not constitute a specified limitation on the electronic device 100. In other embodiments of the present application, the electronic device 100 may include more or fewer components than shown in the figure, or combine some components, or split some components, or arrange the components differently. The components shown in the figure may be implemented in hardware, software, or a combination of software and hardware.

The scenario shown in FIG. 1 is only a schematic example, and the three-dimensional reconstruction method provided by the present application may also be applied in other scenarios. For example, in some scenarios, an electronic device 100 and a scanning device may be included. The electronic device 100 and the scanning device are separately arranged and communicate through wired or wireless means. The electronic device is a computer, a tablet computer and/or a mobile phone, etc., and the scanning device is an oral scanner (an intraoral scanner or an extraoral scanner) or a camera installed on an implant mobile phone, etc.; in some scenarios, the electronic device 100 may be arranged in the scanning device. In some scenarios, other types of devices may also be included. In summary, the embodiments of the present application do not limit specified application scenarios of the three-dimensional reconstruction method.

Please refer to FIG. 2, which is a flowchart of a 3D reconstruction method provided in the embodiment of the present application. The method is applied to an electronic device, and an embodiment of the present application is described by taking a computer program product of the method running on an electronic device (such as the electronic device 100 in FIG. 1) as an example. The method includes the following steps.

S11, a first image frame set of an oral cavity is obtained, the oral cavity is in a first state.

In some embodiments, the oral cavity in the first state indicates that at least one actual scan body is installed in the oral cavity. The actual scan body may be installed on an implant or a base in the oral cavity. The oral cavity may be an oral cavity of a patient with edentulous jaws, such as an oral cavity of a patient with fully edentulous jaws or an oral cavity of a patient with a half-edentulous jaws. Therefore, a user may use the scanning device such as the intraoral scanner or the extraoral scanner or the camera installed on the implant mobile phone to scan the oral cavity in the first state to obtain the first image frame set.

In some embodiments, a surface of the actual scan body is provided with designed geometric patterns and/or marks, etc. These geometric patterns or marks may be accurately captured by the scanning device during scanning, and are used to provide reference points to help the scanning device identify and locate the scan body at multiple angles or positions. For example, the geometric pattern may be a high-contrast pattern, a regular geometric shape (such as a circle, a square), an irregular geometric shape (such as a groove, a protrusion), and the mark may be a non-coded mark or a coded mark, such as a non-coded mark point or a coded mark point. The specified geometric patterns and/or marks may be evenly distributed or unevenly distributed on the actual scanning rod.

In some embodiments, the first image frame set includes multiple image frames. The image frame represents a single two-dimensional image captured by the scanning device at a specified time point during a process of scanning the oral cavity. When scanning the oral cavity in the first state, each image frame in the first image frame set includes an intraoral scan body and surrounding tissues (e.g., soft tissues such as teeth, gums, and mucosa).

S12, a scan body area of each image frame in the first image frame set is identified.

In some embodiments, the scan body area represents an area in the image frame that includes local information of the actual scanning rod.

In some embodiments of the present application, the first image frame set includes texture image frames and depth image frames, and identifying the scan body area of each image frame in the first image frame set includes: extracting features of the texture image frame and extracting features of the depth image frame; obtaining a mask map by fusing the features of the texture image frame and the features of the depth image frame, where the mask map includes the scan body area.

In some embodiments, the texture image frame represents a two-dimensional color image of an interior of the oral cavity, which is used to reflect surface visual features of the teeth, gums, scanning rods and other tissues, including details such as color, texture, spots, cracks, restorations (such as fillings or crowns), surface patterns, uncoded landmarks or coded landmarks, etc. The depth image frame represents two-dimensional spatial information of a structure of the oral cavity. Each pixel value in the depth image frame may represent a distance (a depth value) from a corresponding position of a detail to the scanning device, and the detail may be a geometric shape, a groove and a protrusion on the scanning rod, etc., which is usually represented in grayscale or pseudo-color (for example, bright near and dark far).

In some embodiments, the electronic device may use optical three-dimensional scanning technology (such as a structured light technology, a laser triangulation technology, a binocular stereo vision technology, etc.) to obtain the depth image frames. For example, the texture image frame may be obtained by the scanning device by projecting white light on a scanned object through a color camera, and the depth image frame may be obtained by the scanning device by projecting structured light on the scanned object through a black and white camera. The specified method of obtaining the depth image frame is not limited in the embodiments of the present application.

In some embodiments, the texture image frame and the depth image frame may be obtained at a same time. In other embodiments, the texture image frame and the depth image frame are obtained by sequentially capturing a same position, or by sequentially capturing preceding and following frames. The texture image frame and the depth image frame may can be labeled as associated images.

In some embodiments, the preset recognition model may be a deep learning model, such as a convolutional network model, a recurrent network model, a generative adversarial network model, a semantic segmentation model, etc.

In some embodiments, the preset recognition model includes a multi-layer convolutional network and a multi-layer deconvolutional layer. The electronic device uses the preset recognition model to extract features from a current frame image and a depth image and output a mask map by fusing the extracted features, including: obtaining a feature map by using the multi-layer convolutional network to extract features from the current frame image and extract features from the depth image, and by fusing the extracted features; obtaining the mask map by performing a upsampling recovery processing on the feature map using the multi-layer deconvolutional layer.

In some embodiments, the electronic device obtaining the mask map by performing the upsampling recovery processing on the feature map using the multi-layer deconvolutional layer, includes: performing a transposed convolution operation on the feature map for upsampling, splicing shallow features of a corresponding encoder layer with upsampled deep features by channel to fuse detail information and semantic information. Repeat the above steps, and when a resolution of the feature map is restored to an input size, use an activation function to predict a category probability of each pixel in the feature map to obtain the mask map.

S13, multiple image frames in the first image frame set are spliced and reconstructed, based on feature information of the scan body area, and target three-dimensional data corresponding to the actual scan body in the oral cavity is obtained.

In some embodiments, the feature information of the scan body area includes but is not limited to geometric features (such as point cloud data, edges and contours, preset key points, etc.), and information of preset marks (such as geometric patterns, marks) on the actual scanning rod.

In some embodiments, the target three-dimensional data may include three-dimensional point cloud data and a three-dimensional model corresponding to the actual scanning rod. The target three-dimensional data includes shape information of the scan body and positioning information of the scanning rod. Therefore, based on the feature information of the scan body area, the present application splicing multiple image frames in the first image frame set helps to improve a splicing accuracy, thereby improving an overall accuracy of the three-dimensional reconstruction, obtaining more accurate positioning information of the scanning rod, and making subsequent restoration designs (such as crown, bridge, denture, etc.) based on the target three-dimensional data, improving an implant success rate, improving a matching degree between a restoration product and the patient, and improving a patient's comfort.

In some embodiments of the present application, before reconstructing to obtain the target three-dimensional data corresponding to the actual scan body in the oral cavity, the method also includes: identifying a soft tissue area of each image frame in the first image frame set, where the soft tissue area does not participate in the three-dimensional reconstruction or the soft tissue area participates in the three-dimensional reconstruction of the target three-dimensional data according to a preset weight.

Among them, the soft tissue includes one or more of soft tissue objects such as tongue, gums, lips, etc. in the area of the oral cavity. The soft tissue area refers to an area where the soft tissue is located in the image frame. The preset weight may be a weight input by the user, or the preset weight may be calculated based on the user's edentulous jaw condition and age using a preset model (e.g., an AI model); and/or the preset weight may be determined by analyzing a quality of the image frames scanned by the scanning device (e.g., the image frames in the first image frame set or a second image frame set) using a preset model; and/or the preset weight may be determined based on a splicing error or a splicing success rate of the target three-dimensional data obtained by a real-time splicing using the preset model.

In some embodiments, the preset model may be a deep learning model, such as a convolutional network model, etc. The embodiments of the present application do not limit the preset model.

In some embodiments, the electronic device may pre-train the deep learning model based on feature data of soft tissue objects such as the tongue, gums, and lips, such as the shape, edge features, and color features of the gums, to identify the soft tissue area in each image frame in the first image frame set. In other embodiments, the electronic device may also identify the soft tissue area in each image frame in the first image frame set by other means. The embodiments of the present application are not limited thereto.

It should be noted that, in one embodiment, the electronic device may only identifies the scan body area, removes all areas of the image frames in the first image frame set except the scan body area, and reconstructs only the scan body area. In another embodiment, the electronic device may semantically identifies each part of the image frames in the first image frame set, distinguish the soft tissue and the scanning rod, and determines that an area of the soft tissue (hereinafter "soft tissue area") does not participate in the reconstruction. In yet another embodiment, the electronic device may be semantically identifies each part of the image frames in the first image frame set, distinguishes the soft tissue and the scan body in the image frames, thereby determining the soft tissue area and participating in a reconstruction according to the preset weight to avoid splicing loss. In yet another embodiment, the electronic device may further distinguishes the soft tissue area, and distinguishes the soft tissue into tongue, gums, and lips, and removes the tongue and lips as miscellaneous data, and retains data of gum for subsequent operations.

Specifically, a semantic recognition is performed on each part of the image frame in the first image frame set to distinguish a tongue, gum, lip or scanning rod. For example, if it is a tongue and lip, it is deleted, if it is a scanning rod, it is given a weight of 80%, and if it is a gum, it is given a weight of 20%. When splicing multiple image frames, it is determined whether there is overlapped feature data between adjacent image frames in the multiple image frames; if there is overlapped feature data between adjacent image frames in the multiple image frames, the adjacent image frames are spliced in real time based on the overlapped feature data. Among them, the electronic device may determine whether there is overlapped feature data between adjacent image frames in the multiple image frames based on the weight of the scan body (for example, 80%) and the weight of the gum (for example, 20%). In another example, the electronic device may set different weights for splicing according to different classifications of semantic recognition results. Specifically, the electronic device may perform semantic recognition on each part of the image frame in the first image frame set to distinguish whether it is a tongue, gum, lip or scanning rod, and give weights to the scanned data obtained by scanning based on the semantic recognition results. For example, an initial value of the scanning data in each image frame is set to 1. If the semantic recognition result is tongue, then based on the initial value of the scanning data, the weight is reduced to obtain a corresponding weight when the semantic recognition result is tongue, for example, it may be reduced by 80%, then the corresponding weight of tongue is 20%; if it is lip, then based on the initial value of the scanning data, the weight is reduced to obtain the corresponding weight when the semantic recognition result is lip, for example, it is reduced by 80%, then the corresponding weight of lip is 20%; if the semantic recognition result is scanning rod, then the weight is increased based on the initial value of the scanning data to obtain the corresponding weight when the semantic recognition result is scanning rod, for example, the weight is increased by 100%; if the semantic recognition result is gum, then the weight is increased based on the initial value of the scanning data to obtain the corresponding weight when the semantic recognition result is gum, for example, the weight is increased by 20%. The electronic device splices and reconstructs the scanning data whose weights meet a preset threshold range according to all the scanning data after multiple verification and calculation to obtain the target three-dimensional data.

In some embodiments of the present application, the electronic device may perform one or more operations, which comprise a removal operation, a marking operation, a hiding operation, and a segmentation operation on the soft tissue area or the scan body area in each image frame based on feature information of the soft tissue area and/or feature information of the scan body area in each image frame in the first image frame set.

It should be noted that the removal operation may be deletion, the marking operation may be marking with different colors, the segmentation operation may be segmentation by determining the boundary, and the hiding operation may be hiding the pre-selected area. The marking operation, hiding operation or segmentation operation does not affect the integrity of the scanning data. If necessary, the entire scanning data may be restored and displayed through settings.

In some embodiments, the feature information of the soft tissue area may include the soft tissue's geometric shape (e.g., a wavy shape of a margin of the gum, a contour of a tongue coating, etc.), color and texture features, three-dimensional structural features (e.g., a topological structure, spatial deformation features, etc.), function and physiological state features, etc. In the case of installing the scan body in the oral cavity, the feature information of the soft tissue area may also include interaction features between the soft tissue and the scanning rod, such as a contact area between the soft tissue and the scanning rod, a pressure distribution, etc. The specified content of the feature information of the soft tissue area is not limited in the embodiments of the present application.

In one embodiment, when combining the scanning device (such as an oral digital impression device or an intraoral scanner, an extraoral scanner) with the scan body for three-dimensional reconstruction, the anatomical morphology of the patient's oral cavity (such as dentition, gums, occlusal relationship) may be restored for a digital design of restorations or implants. However, when the scan body is installed in the patient's oral cavity, during the scanning process, the complex anatomical structure around the scan body (such as gums, lips and tongue and other soft tissues) is prone to data overlap or interference with the scan body area, resulting in mismatching of common areas when splicing image frames, thereby causing errors to accumulate frame by frame, and ultimately manifested as distortion of the three-dimensional model or even splicing fracture, which in turn affects the accuracy and clinical adaptability of subsequent restoration design.

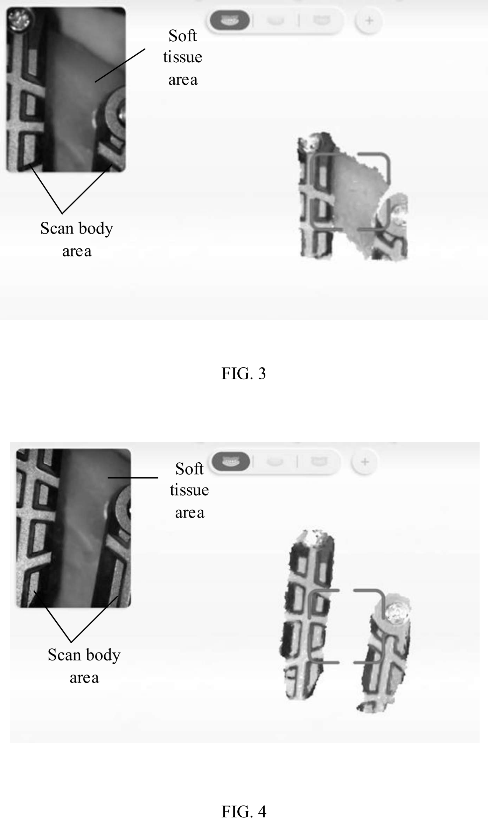

For example, as shown in FIG. 3, an upper left side of the figure shows a window of the scanning device in the oral cavity, and a lower right side of the figure shows a reconstructed 3D model. As shown in FIG. 3, the reconstructed 3D model includes a large area of soft tissue (such as a boxed area in FIG. 3), which is prone to deformation and data overlap or interference with the scan body area.

In order to solve the above problem, the electronic device may perform one or more operations, which comprise a removal operation, a marking operation, a hiding operation and a segmentation operation on the soft tissue area in each image frame based on the feature information of the soft tissue area in each image frame in the first image frame set and/or the feature information of the scan body area, so that the electronic device may splice multiple image frames based only on the feature information of the scan body area, thereby improving the accuracy of the splicing and further improving the accuracy of the three-dimensional reconstruction. For example, as shown in FIG. 4, the soft tissue area in each image frame is removed, and as shown in a lower right figure in FIG. 4, the soft tissue area is not displayed in the target three-dimensional data (a three-dimensional model) obtained by splicing and three-dimensionally reconstructing the image frames after the removal operation.

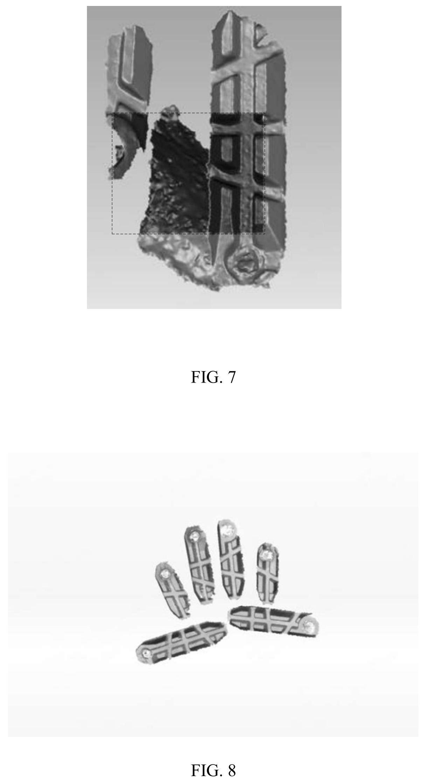

In some embodiments of the present application, splicing and constructing multiple image frames in the first image frame set based on feature information of the scan body area, and obtaining target three-dimensional data corresponding to the actual scan body in the oral cavity, includes: based on the feature information of the scan body area, splicing the multiple image frames in the first image frame set in real time; performing a real-time three-dimensional reconstruction based on the real-time spliced image frames, and obtaining the target three-dimensional data corresponding to the actual scanning rod. Among them, when the first image frame set of the oral cavity in the first state is obtained, the target three-dimensional data is displayed in real time on an interactive interface of the electronic device. Therefore, in this embodiment, the recognition of the scan body area or soft tissue area of each image frame in the first image frame set is also a real-time operation, so that real-time scanning and real-time splicing and reconstruction may be realized. During the scanning process, as the scanning device handed by the user moves in the oral cavity, the target three-dimensional data shown in the lower right corner of FIG. 4 is gradually obtained, and the target three-dimensional data shown in FIG. 8 is displayed in real time on the interactive interface, which is convenient for the user to understand the scanning progress.

In some embodiments of the present application, splicing and constructing multiple image frames in the first image frame set based on feature information of the scan body area, and obtaining target three-dimensional data corresponding to the actual scan body in the oral cavity, includes: based on the feature information of the scan body area, splicing the multiple image frames in the first image frame set in real time; performing a real-time three-dimensional reconstruction based on the spliced image frames, and obtaining actual scanning data corresponding to the actual scan body in real time; matching standard data of the actual scan body from a standard scan body database based on the feature information of the scan body area; and replacing the scanning data of the actual scan body with the standard data of the actual scan body to obtain the target three-dimensional data.

The standard scan body database stores standard data of various types of scanning rods, which represent a complete, non-missing, and error-free reference parameter set of the scan body in an ideal state, such as a CAD model of a designed scanning rod.

Therefore, in this embodiment, the target three-dimensional data represents a structure of a standard scan body and a position and a posture of the actual scanning rod.

In some embodiments, the electronic device acquires the actual scanning data corresponding to the actual scan body in real time during the process of real-time splicing of multiple image frames in the first image frame set based on the feature information of the scan body area. However, the actual scanning data may be missing due to reasons such as occlusion or scanning device failure during the scanning process, which may affect the accuracy of subsequent image frame splicing and further affect the accuracy of the target three-dimensional data. In order to solve the above problem, the electronic device matches the standard data of the actual scan body from the standard scan body database based on the feature information of the scan body area, and replaces the scanning data of the actual scan body with the matched standard data of the actual scan body to obtain the target three-dimensional data. By replacing the actual scanning data of the actual scan body with the standard data of the actual scanning rod, it is ensured that whether the scanning data of the actual scan body is complete or partial, it may be replaced with the complete standard data of the actual scanning rod, thereby helping to improve the accuracy of the reconstructed target three-dimensional data.

In some embodiments, in the process of matching the standard data of the actual scan body from the standard scan body database, the matching means a regular matching during the real-time scanning process. During the real-time scanning process, each time a specified amount of actual scanning data is obtained or each time interval, the current actual scanning data is feature-spliced with the standard data. As the scanning data increases, the position and posture of the standard data of the actual scan body that has been feature-spliced are updated. By updating the position and posture of the standard data of the actual scan body that has been feature-spliced as the scanning data increases, the splicing accuracy and splicing success rate of the standard data of the actual scan body and the scanning data of the actual scan body may be improved, and the number of scanning rods is limited, whether it is one actual scan body or multiple actual scanning rods, feature splicing matching may be performed. Among them, the scanning data of the target scan body in the current scanning data is feature-spliced and matched with the standard data, and the standard data may undergo coordinate transformation during the feature splicing process.

In some embodiments, matching the standard data of the actual scan body from the standard scan body database based on the feature information of the scan body area includes: determining identification information of the actual scan body based on the feature information of the scan body area; and matching the standard data of the actual scan body from the standard scan body database based on the identification information.

Among them, the standard scan body database stores standard data of various types of scanning rods. The standard data of each type of scan body corresponds to identification information such as a model. The electronic device may determine the model of the actual scan body in the scan body area based on the feature information of the scan body area, and based on the model of the actual scanning rod, obtain a corresponding standard model of each actual scan body from the standard scan body database, and then generate the target three-dimensional data based on the corresponding standard model of each actual scan body and the posture of each scan body in the scanning data.

In some embodiments, the electronic device may load a standard scan body database into a cloud server, and download standard data of the actual scan body from the cloud server.

In some embodiments of the present application, splicing multiple image frames in the first image frame set based on feature information of the scan body area comprises: determining whether there is overlapped feature data between adjacent image frames in the multiple image frames based on the feature information of the scan body area; if there is overlapped feature data between adjacent image frames in the multiple image frames, splicing the adjacent image frames in real time based on the overlapped feature data; if there is no overlapped feature data between adjacent image frames in the multiple image frames, issuing a prompt message to prompt a user that the splicing is failed.

Where when the multiple image frames in the first image frame set have been spliced, the target three-dimensional data may be globally optimized.

In some embodiments, the overlapped feature data represents feature data covering a same area (i.e., a common area) between different image frames. The overlapped feature data may include geometric overlapping features, texture overlapping features, semantic overlapping features, and the like.

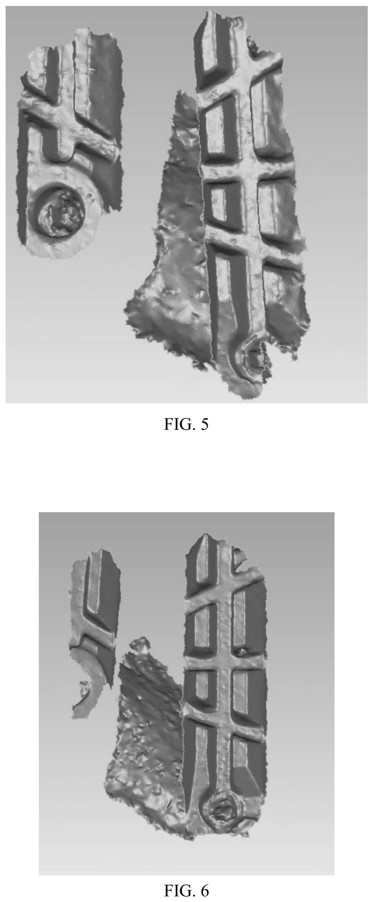

Taking the use of an oral digital scanner to scan the oral cavity in the first state to obtain the first image frame set as an example, when the oral digital scanner moves in the patient's oral cavity, multiple images may be continuously taken or point cloud data may be captured. The geometric features on the scan body exist as fixed reference points in these images. Each scan (single frame) may capture some features of the scanning rod, and these features form a common area between different image frames, that is, multiple image frames include data of same partial features. For example, as shown in FIG. 5 to FIG. 7, there is a common area between the image frame shown in FIG. 5 and the image frame shown in FIG. 6, and the common area is shown as a dashed box in FIG. 7. In some embodiments, different colors may be used to indicate different common areas. For example, a red color may be used to indicate the common area shown in FIG. 7.

If each image frame includes feature information of the scan body area, such as some geometric features on the scanning rod, the electronic device may determine the common area between different image frames through the feature information of the scanning rod, and align and splice the different image frames according to the features of the common area. For example, if two adjacent image frames both capture a same mark on the scanning rod, the electronic device may use position information of this mark to determine the common area between the two adjacent image frames, calculate a relative position and an angle between the two adjacent image frames based on the feature data of the common area, and splice the two adjacent image frames into a larger three-dimensional model based on the relative position and angle between the two adjacent image frames. With the real-time splicing of the image frames, a three-dimensional model of the oral cavity is reconstructed, as shown in FIG. 8.

However, in the case of the user scans the oral cavity wrongly or the scanning device has a failure, some image frames may not include the scan body area, for example, some image frames of a plurality of consecutive image frames do not include the scan body area, the plurality of consecutive image frames includes an image frame "A" (with the scan body area), an image frame "B" (without the scan body area), an image frame "C" (without the scan body area), an image frame "D" (with the scan body area). In this case, based on the feature information of the scan body area, it may be determined that there is no overlapped feature data between the image frame "A" and the image frame "B", the image frame "B" and the image frame "C", and the image frame "C" and the image frame "D". At this time, the electronic device may issue a prompt message to inform the user that the splicing is failed.

In some embodiments, the prompting message may be issued through a voice, a prompt box, a scanning box color change, etc. The embodiment of the present application does not limit a prompting method.

In some embodiments, while or after prompting the user that splicing is failed, the electronic device may also issue a prompt message to prompt the user to return to an initial position to scan, and indicate the initial position on the interactive interface, where the initial position may include a scanning position corresponding to a last image frame that was successfully spliced.

In other embodiments of the present application, if splicing fails and there is no overlapped feature data between adjacent image frames in the multiple image frames, no prompt message may be issued, a common area between the current image frame that is failed to be spliced and other image frames remaining in the first image frame set is found, and the current image frame that is failed to be spliced is spliced with the other image frames remaining in the first image frame set according to the common area, or a common area between the current image frame that is failed to be spliced and the target three-dimensional data obtained by real-time splicing is found, and the current image frame that is failed to be spliced is spliced with the target three-dimensional data obtained by real-time splicing according to the common area, until the splicing is successful.

In some embodiments, assuming that adjacent image frames include a first image frame and a second image frame, the electronic device may determine the overlapped feature data between adjacent image frames in the following manner: If each of the adjacent image frames includes a preset mark, the electronic device may obtain first geometric data of the preset mark and an adjacent mark in the first image frame, and obtain second geometric data of the preset mark and an adjacent mark in the second image frame. Among them, the adjacent mark includes another mark within a preset area with the preset mark as a center. If the first geometric data and the second geometric data meet preset conditions, a preset radius is determined according to the first geometric data and the second geometric data, and feature data of an area enclosed by the preset mark and the preset radius in the first image frame and the second image frame is determined as the overlapped feature data.

In this embodiment, the preset mark includes but is not limited to a coding mark and a geometric pattern mark. The preset area may be customized according to the feature information of the actual scanning rod. The preset radius may be customized according to the first geometric data and the second geometric data.

In this embodiment, the first geometric data includes data such as a distance and a relative angle between the preset mark and the adjacent mark in the first image frame. The second geometric data includes data such as a distance and a relative angle between the preset mark and the adjacent mark in the second image frame. The preset conditions may be set by the user. For example, the preset conditions may be set to that an error between the first geometric data and the second geometric data is less than a preset error threshold. The preset error threshold may be set by the user.

As an example, the first image frame includes markers "A1" and "A2", and the second image frame includes markers "A2" and "A3". The marker "A2" in the first image frame and the marker "A2" in the second image frame are the same marker, and the electronic device may determine that the preset marker "A2" exists in both the first image frame and the second image frame. The marker A1 included in the first image frame is an adjacent marker of the preset marker A2. Assume that the preset error threshold includes a distance error threshold and an angle error threshold, the distance error threshold is set to 0.2 mm, and the angle error threshold is set to 1°. The electronic device may calculate a distance "d1" and an angle "θ1" between the marker "A1" and the marker "A2", for example, "d1"=5 mm, "θ1"=30°. The marker "A3" included in the second image frame is an adjacent marker of the preset marker "A2". The electronic device may calculate a distance "d2" and an angle "02" between the marker "A3" and the marker "A2", for example, "d1"=5.1 mm, "θ1"=29.5°. The electronic device calculates an error between the first geometric data and the second geometric data: |d1-d2|=0.1 mm, |θ1-θ2|=0.5°. According to a value of |d1-d2| being less than the distance error threshold, and the value of |θ1-θ2| being less than the angle error threshold, the electronic device may determine that the first geometric data and the second geometric data meet the preset conditions. At this time, the electronic device may determine that the marks "A1" and "A2" in the first image frame and "A3" in the second image frame are a same group of marks. The electronic device may set a preset radius according to the distance "d1" between the preset mark and the adjacent mark in the first image frame and the distance "d2" between the preset mark and the adjacent mark in the second image frame. For example, the preset radius may be set to 5 mm. The electronic device uses the feature data of the area enclosed by the preset mark and the preset radius in the first image frame and the second image frame as the overlapped feature data.

In some embodiments, the electronic device may use an image processing algorithm (e.g., an HSV color segmentation algorithm, a morphological filtering algorithm) to locate the mark on the scanning rod. This embodiment of the present application is not limited.

In other embodiments, the electronic device may also determine the overlapped feature data between adjacent image frames in other ways. For example, the overlapped feature data between adjacent image frames may be determined based on the geometric features of feature marks of the scan body area in the adjacent image frames. This embodiment of the application is not limited to this.

In some embodiments, after determining the overlapped feature data between adjacent image frames, the electronic device may splice the adjacent image frames based on the overlapped feature data. Specifically, the electronic device may calculate relative posture parameters between adjacent image frames, such as an optimal rotation matrix, a translation vector and other parameters, based on the overlapped feature data. The electronic device maps the adjacent image frames to a same coordinate system based on the relative posture parameters, and fuses point cloud data corresponding to the adjacent image frames to splice the adjacent image frames.

In actual applications, some doctors need to display a global oral cavity model in order to quickly and accurately capture anatomical information in the oral cavity, such as details of the gums and surrounding tissues, to facilitate the design optimization of implants and restorations.

To display the global oral cavity model, in some embodiments of the present application, the method also includes the following steps: S14: Acquiring a second image frame set of the oral cavity in a second state; S15: Based on the second image frame set, acquiring regional three-dimensional data of a soft tissue area in each image frame in the second image frame set; S16: Acquiring a third image frame set, the third image frame set including some image frames of the first image frame set or updated image frames acquired when the oral cavity is in the first state; S17: Based on feature information of the soft tissue area in each image frame in the third image frame set and feature information of the scan body area, merging the regional three-dimensional data corresponding to the soft tissue area with the target three-dimensional data to obtain an oral cavity model.

The oral cavity in the second state indicates that no actual scan body is installed in the oral cavity, and the regional three-dimensional data includes three-dimensional point cloud data corresponding to the soft tissue area. In this embodiment, the three-dimensional data of the area obtained by scanning the oral cavity without the actual scan body installed may have a higher scanning accuracy. Finally, based on the third image frame set, the soft tissue model not interfered by the scan body and the scan body model not interfered by the gums may be combined into a global oral cavity model, and the reconstruction accuracy is higher.

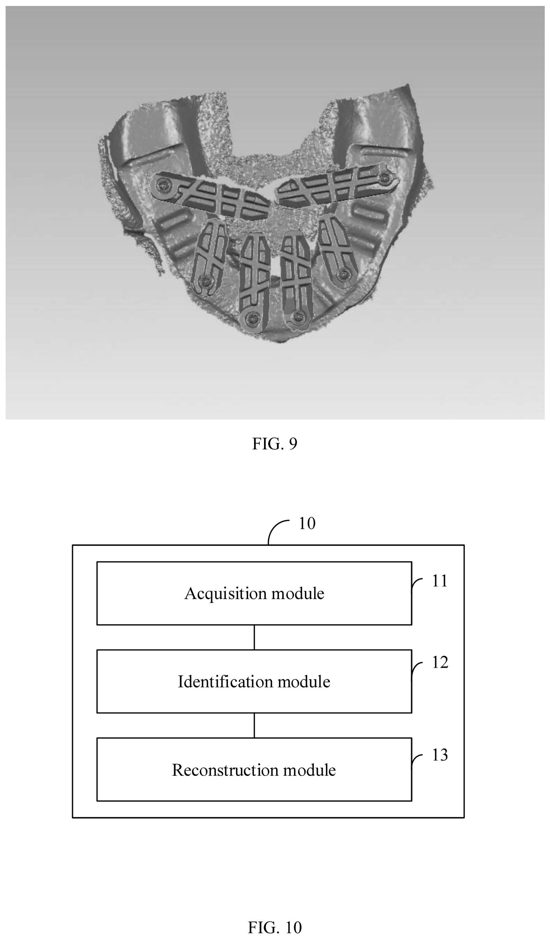

In one embodiment, steps S14 and S15 may be performed before step S11, and steps S16 and S17 may be performed after step S13, for example, an order of executing the steps is S14, S15, S11, S12, S13, S16 and S17. Specifically, the scanning device may be used to scan the soft tissue (e.g., gums) in the oral cavity in the second state, and the scanning device sends second image frames obtained by the scanning device to the electronic device. The electronic device obtains the second image frame set of the oral cavity in the second state, and based on the second image frame set, obtains the regional three-dimensional data of the soft tissue area in each image frame in the second image frame set. After scanning the soft tissue in the oral cavity in the second state, the scanning device is used to scan the oral cavity in the first state, and the electronic device obtains the first image frame set, and based on the first image frame set, obtains the target three-dimensional data corresponding to the actual scan body in each image frame in the first image frame set. After obtaining the target three-dimensional data, the scanning device is used to scan the oral cavity in the first state to obtain a third image frame set. Based on the feature information of the soft tissue area in each image frame in the third image frame set and the feature information of the scan body area, the electronic device merges the regional three-dimensional data corresponding to the soft tissue area with the target three-dimensional data to obtain the global oral cavity model as shown in FIG. 9.

It should be noted that the third image frame set in steps S16 and S17 includes some image frames of the first image frame set or updated image frames obtained when the oral cavity is in the first state, that is, they may be re-scanned and obtained using the scanning device, or they may be historical image frames obtained in step S11.

After acquiring the second image frame set of the oral cavity in the second state, the global oral cavity model may be displayed on the interactive interface in response to a switching instruction of the user. The electronic device may generate the switching instruction when the user press or click or touch a switching button on the interactive interface, and display the soft tissue (e.g., gums) on the interactive interface in response to the switching instruction. After steps S14 and S15, the user may select and execute the above steps S16 and S17 to generate and display the global oral cavity model for the user to view.

In other embodiments of the present application, steps S14 and S15 may be performed before step S11, S16 may be performed simultaneously with any step S11, S12, S13 or S16 may be performed after any one of steps S11, S12, S13, and S17 may be performed after step S13. For example, an order of executing the steps is S14, S15, S11, S16, S12, S13 and S17, or the order of executing the steps is S14, S15, S11, S12, S16, S13 and S17, or other reasonable order of executing the steps is within the scope of the present application.

In other embodiments of the present application, steps S14 and S15 may be performed after step S13, S16 may be performed simultaneously with any step S11, S12, S13 or after any of the steps S11, S12, S13, and S17 may be performed after step S13 or step S15. For example, a step execution order is S11, S12, S13, S14, S15, S16, and S17, or the step execution order is S11, S16, S12, S13, S14, S15, and S17, or the step execution order is S11, S12, S13, S16, S14, S15, and S17, or the step execution order is S11, S12, S13, S16, S14, S15, and S17, or the step execution order is S11, S12, S16, S13, S14, S15, and S17, or other reasonable step execution order is within the scope of the present application.

In other embodiments of the present application, in response to a user's switching instruction, the second image frame set in steps S14 and S15 may not be obtained, and the soft tissue area identified in the first image frame set is spliced with the target three-dimensional model to obtain the global oral cavity model. At this time, since the target three-dimensional model obtained at a beginning has no interference from gum data, the final global oral cavity model may also have better accuracy.

In some embodiments of the present application, the three-dimensional reconstruction method further includes: generating a design model based on the target three-dimensional data and sending the design model to a 3D printing device; receiving a user request for modifying the design model in real time; and outputting a revised three-dimensional design model based on the user request and the target three-dimensional model. In the embodiment of the present application, the revised three-dimensional design model may be output based on the user request and the target three-dimensional model, so that the user may set dentures of different numbers, sizes and shapes.

The present application provides the three-dimensional reconstruction method. When the actual scan body is installed in the oral cavity, the first image frame set of the oral cavity is obtained, and the scan body area in each image frame in the first image frame set is identified. Based on the feature information of the scan body area, multiple image frames in the first image frame set are spliced to reconstruct the target three-dimensional data corresponding to the actual scan body in the oral cavity, thereby realizing image frame reconstruction based on a rigid structure. Since the rigid structure of the scan body is not easily deformed during the scanning process and has good stability, splicing multiple image frames in the first image frame set based on the feature information of the scan body area helps to improve the splicing accuracy, thereby improving the overall accuracy of the three-dimensional reconstruction, and making subsequent restoration designs based on the target three-dimensional data, thereby improving the success rate of implantation, and improving the matching degree between the restoration product and the patient and the comfort of the patient.

It should be understood that a size of the serial numbers of the steps in the above embodiments does not mean an execution order. The execution order of each process should be determined by its function and internal logic, and should not constitute any limitation on the implementation process of the embodiments of the present application.

Please refer to FIG. 10, which is a structural diagram of a three-dimensional reconstruction apparatus provided in an embodiment of the present application, which may implement the details of the three-dimensional reconstruction method in the above embodiment and achieve the same effect. As shown in FIG. 10, the three-dimensional reconstruction apparatus 10 may be applied to an electronic device with a data processing function. The three-dimensional reconstruction apparatus 10 includes: an acquisition module 11, an identification module 12, and a reconstruction module 13. The acquisition module 11 is used to acquire a first image frame set of an oral cavity in a first state, where the oral cavity in the first state indicates that at least one actual scan body is installed in the oral cavity; the identification module 12 is used to identify a scan body area of each image frame in the first image frame set; the reconstruction module 13 is used to splice multiple image frames in the first image frame set based on feature information of the scan body area, and reconstruct the target three-dimensional data corresponding to the actual scan body in the oral cavity.

In some embodiments, the recognition module 12 is also used to identify the soft tissue area of each image frame in the first image frame set before reconstructing for obtaining the target three-dimensional data corresponding to the actual scan body in the oral cavity; the reconstruction module 13 is also used to prevent the soft tissue area from participating in the three-dimensional reconstruction of the target three-dimensional data or allow the soft tissue area to participate in the three-dimensional reconstruction of the target three-dimensional data according to a preset weight.

In some embodiments, the reconstruction module 13 is further used to perform one or more operations, which comprise a removal operation, a marking operation, a hiding operation, and a segmentation operation on the soft tissue area or the scan body area in each image frame based on the feature information of the soft tissue area and/or the feature information of the scan body area in each image frame in the first image frame set. In some embodiments, the first image frame set includes a texture image frame and a depth image frame, and the recognition module 12 is further used to extract and fuse features of the texture image frame and features of the depth image frame using a preset recognition model to obtain a mask map, and the mask map includes the scan body area.

In some embodiments, the reconstruction module 13 is also used to perform real-time splicing of multiple image frames in the first image frame set based on feature information of the scan body area; perform real-time three-dimensional reconstruction based on the real-time spliced image frames to obtain target three-dimensional data corresponding to the actual scanning rod.

In some embodiments, the reconstruction module 13 is further used to perform a real-time splicing of multiple image frames in the first image frame set based on feature information of the scan body area; perform a real-time three-dimensional reconstruction based on the spliced image frames to obtain actual scanning data corresponding to the actual scan body in real time; match standard data of the actual scan body from a standard scan body database based on the feature information of the scan body area, and the matching is a regular matching during the real-time scanning process. During the real-time scanning process, each time a specified amount of actual scanning data is obtained or each time interval, the current actual scanning data is feature-spliced with the standard data, and as the scanning data increases, the position and posture of the standard data is updated; the scanning data of the actual scan body is replaced with the matched standard data of the actual scan body to obtain the target three-dimensional data.

In some embodiments, the acquisition module 11 is further used to acquire a second image frame set of the oral cavity in a second state, where the oral cavity in the second state indicates that no actual scan body is installed in the oral cavity; based on the second image frame set, the acquisition module 11 acquires regional three-dimensional data of the soft tissue area in each image frame in the second image frame set;

In some embodiments, the acquisition module 11 is also used to acquire a third image frame set, which includes some image frames of the first image frame set or updated image frames acquired when the oral cavity is in the first state; the reconstruction module 13 is also used to merge the regional three-dimensional data corresponding to the soft tissue area with the target three-dimensional data based on the feature information of the soft tissue area in each image frame in the third image frame set and the feature information of the scan body area to obtain an oral cavity model.

In some embodiments, the three-dimensional reconstruction apparatus 10 also includes: a display module, which is used to display the target three-dimensional data in real time on the interactive interface of the electronic device when acquiring a first image frame set of the oral cavity in the first state based on feature information of the scan body area; or after acquiring a second image frame set of the oral cavity in a second state, display the oral cavity model on the interactive interface in response to a user's switching instruction.

In some embodiments, the reconstruction module 13 is also used to determine whether there is overlapped feature data between adjacent image frames in multiple image frames based on feature information of the scan body area; if there is overlapped feature data between adjacent image frames in the multiple image frames, the reconstruction module 13 splices the adjacent image frames in real time based on the overlapped feature data; if there is no overlapped feature data between adjacent image frames in the multiple image frames, the reconstruction module 13 issues a prompt message to prompt the user that the splicing fails, and/or issues a prompt message to prompt the user to return to an initial position for scanning.

In some embodiments, the three-dimensional reconstruction apparatus 10 also includes: a design module, which is used to generate a design model based on the target three-dimensional data and send the design model to the 3D printing device; receive a user request for modifying the design model in real time; and output a revised three-dimensional design model based on the user request and the target three-dimensional model.

For the specified definition of the 3D reconstruction apparatus 10, please refer to the definition of the 3D reconstruction method above, which may not be repeated here. Each module in the above 3D reconstruction apparatus 10 may be implemented in whole or in part by software, hardware and a combination thereof. Each of the above modules may be embedded in or independent of the processor in the electronic device in the form of hardware, or may be stored in the memory of the electronic device in the form of software, so that the processor may call and execute the operations corresponding to each of the above modules.

An embodiment of the present application also provides a computer-readable storage medium, on which a computer program is stored. The computer program includes program instructions. The method implemented when the program instructions are executed may refer to the three-dimensional reconstruction method in the above-mentioned embodiments of the present application.

The computer-readable storage medium may be an internal storage device of the electronic device of the above-mentioned embodiment, such as a hard disk or memory of the electronic device. The computer-readable storage medium may also be an external storage device of the electronic device, such as a plug-in hard disk, a smart memory card (SMC), a secure digital (SD) card, a flash card, etc. equipped on the electronic device.

Furthermore, the computer-readable storage medium may mainly include a program storage area and a data storage area, where the program storage area may store an operating system, an application required for at least one function, etc.; the data storage area may store data created according to a use of the electronic device, etc.

Finally, it should be noted that the above embodiments are only used to illustrate the technical solution of the present application and are not intended to limit it. Although the present application has been described in detail with reference to the preferred embodiments, a person of ordinary skill in the art should understand that the technical solution of the present application may be modified or replaced by equivalents without departing from the spirit and scope of the technical solution of the present application.

## Claims

1. A three-dimensional reconstruction method applied to an electronic device (100), **characterized in that** the three-dimensional reconstruction method comprises:
obtaining a first image frame set of an oral cavity in a first state, the oral cavity in the first state indicating that at least one actual scan body is installed in the oral cavity;
identifying a scan body area of each image frame in the first image frame set; and
based on feature information of the scan body area, splicing and reconstructing a plurality of image frames in the first image frame set, and obtaining target three-dimensional data corresponding to the at least one actual scan body in the oral cavity.

2. The three-dimensional reconstruction method according to claim 1, wherein before obtaining the target three-dimensional data corresponding to the actual scan body in the oral cavity, the method further comprises:
identifying a soft tissue area in each image frame in the first image frame set, wherein the soft tissue area is not used in a three-dimensional reconstruction of the target three-dimensional data or the soft tissue area is used in the three-dimensional reconstruction of the target three-dimensional data according to a preset weight.

3. The three-dimensional reconstruction method according to claim 2, further comprising:
based on at least one of feature information of the soft tissue area and the feature information of the scan body area in each image frame in the first image frame set, performing one or more operations, which comprise a removal operation, a marking operation, a hiding operation, and a segmentation operation on the soft tissue area in each image frame.

4. The three-dimensional reconstruction method according to claim 3, wherein the first image frame set comprises a texture image frame and a depth image frame, and identifying the scan body area of each image frame in the first image frame set comprises:
performing a feature extraction and a feature fusion on the texture image frame and the depth image frame by using a preset recognition model, and obtaining a mask image which comprises the scan body area.

5. The three-dimensional reconstruction method according to claim 1, wherein based on the feature information of the scan body area, splicing and reconstructing the plurality of image frames in the first image frame set, and obtaining the target three-dimensional data corresponding to the at least one actual scan body in the oral cavity, comprises:
based on the feature information of the scan body area, splicing the plurality of image frames in the first image frame set in real time, and obtaining real-time spliced image frames; and
based on the real-time spliced image frames, obtaining the target three-dimensional data corresponding to the at least one actual scanning rod.

6. The three-dimensional reconstruction method according to claim 1, wherein based on feature information of the scan body area, splicing and reconstructing the plurality of image frames in the first image frame set, and obtaining target three-dimensional data corresponding to the at least one actual scan body in the oral cavity, comprises:
based on the feature information of the scan body area, splicing the plurality of image frames in the first image frame set in real time;
based on the spliced image frames, obtaining actual scanning data corresponding to the at least one actual scan body in real time;
based on the feature information of the scan body area, matching standard data of the at least one actual scan body from the standard scan body database, wherein the matching is a regular matching in a real-time scanning process, features of current actual scanning data are spliced with features of the standard data each time a specified amount of actual scanning data is obtained or each time interval during the real-time scanning process, and a position and a posture of the standard data are updated as the scanning data is increased; and
replacing the scanning data of the at least one actual scan body by using the standard data of the at least one actual scanning rod, and obtaining the target three-dimensional data.

7. The three-dimensional reconstruction method according to claim 1, further comprising:
acquiring a second image frame set of the oral cavity in a second state, wherein the oral cavity in the second state indicates that no actual scan body is installed in the oral cavity;
based on the second image frame set, acquiring regional three-dimensional data of a soft tissue area in each image frame in the second image frame set;
acquiring a third image frame set, wherein the third image frame set comprises some image frames of the first image frame set or updated image frames acquired when the oral cavity is in the first state;
based on feature information of each image frame in the third image frame set and the feature information of the scan body area, merging the regional three-dimensional data corresponding to the soft tissue area with the target three-dimensional data, and obtaining an oral cavity model.

8. The three-dimensional reconstruction method according to claim 7, further comprising:
based on the feature information of the scan body area, displaying the target three-dimensional data in real time on an interactive interface of the electronic device (100), when acquiring the first image frame set of the oral cavity in the first state; or
displaying the oral cavity model on the interactive interface in response to a switching instruction after the second image frame set has been obtained.

9. The three-dimensional reconstruction method according to claim 8, further comprising:
in response that the splicing fails and there is no overlapped feature data between adjacent image frames in the plurality of image frames, not issuing a prompt message, finding a common area between a current image frame that is failed to be spliced and other image frames remaining in the first image frame set, and splicing the current image frame with the other image frames remaining in the first image frame set according to the common area, until the splicing is successful; or
in response that the splicing fails and there is no overlapped feature data between adjacent image frames in the plurality of image frames, not issuing a prompt message, finding a common area between the current image frame and the target three-dimensional data obtained by real-time splicing, and splicing the current image frame with the target three-dimensional data obtained by real-time splicing, until the splicing is successful.

10. The three-dimensional reconstruction method according to claim 1, wherein based on the feature information of the scan body area, splicing the plurality of image frames in the first image frame set comprises:
based on the feature information of the scan body area, determining whether there is overlapped feature data between adjacent image frames in the plurality of image frames;
in response that there is overlapped feature data between adjacent image frames in the plurality of image frames, splicing the adjacent image frames in real time based on the overlapped feature data;
in response that there is no overlapped feature data between adjacent image frames in the plurality of image frames, prompting a user that the splicing is failed and/or prompting the user to return to an initial position for scanning by issuing a prompt message.

11. The three-dimensional reconstruction method according to claim 10, wherein the adjacent image frames comprise a first image frame and a second image frame, the method further comprises:
determining the overlapped feature data between the adjacent image frames by:
in response that each of the adjacent image frames comprises a preset mark, obtaining first geometric data of the preset mark and an adjacent mark in the first image frame, and obtaining second geometric data of the preset mark and an adjacent mark in the second image frame;
in response that the first geometric data and the second geometric data meet preset conditions, determining a preset radius according to the first geometric data and the second geometric data, and determining feature data of an area enclosed by the preset mark and the preset radius in the first image frame and the second image frame as the overlapped feature data.

12. The three-dimensional reconstruction method according to claim 10, further comprising:
performing a semantic recognition on each image frame in the first image frame set;
in response that the scan body is recognized, giving a weight to the scanning rod, and in response that the soft tissue area is recognized, giving a weight to the soft tissue area;
determining whether there is overlapped feature data between adjacent image frames in the plurality of image frames based on the weight of the scan body and the weight of the soft tissue area; and
in responses that there is overlapped feature data between adjacent image frames in the plurality of image frames, splicing the adjacent image frames based on the overlapped feature data.

13. The three-dimensional reconstruction method according to claim 1, further comprising:
generating a design model based on the target three-dimensional data and sending the design model to a three-dimensional printing device;
receiving a user request for modifying the design model in real time;
outputting a revised 3D design model based on the user request and the target three-dimensional model.

14. An electronic device (100), **characterized in that** the electronic device (100) comprises:
a storage device (102) storing a computer program; and
at least one processor (103), when the computer program is executed by the at least one processor (103), the at least one processor (103) is caused to implement the three-dimensional reconstruction method described in any one of claims 1 to 13.

15. A non-transitory storage medium, being stored with a computer program, which when executed by a processor (103), causing the processor (103) to implement the three-dimensional reconstruction method described in any one of claims 1 to 13.
